# EUROPEAN PATENT APPLICATION

(11) **EP 2 955 667 A2**
(43) Date of publication of application: **16.12.2015**
(21) Application number: 15158763.1
(22) Date of filing: 12.03.2015
(51) Int. Cl.: G06K 9/72

(54) **Database management device, and address recognition device**

(30) Priority: 13.03.2014 JP 2014050578
(71) Applicant: Kabushiki Kaisha Toshiba, Minato-ku Tokyo 105-8001 (JP)
(72) Inventor: Irie, Bunpei, Tokyo, Tokyo 105-8001 (JP); Hamamura, Tomoyuki, Tokyo, Tokyo 105-8001 (JP); Maeda, Masaya, Tokyo, Tokyo 105-8001 (JP); Piao, Ying, Tokyo, Tokyo 105-8001 (JP); Watanabe, Yuka, Tokyo, Tokyo 105-8001 (JP); Baba, Kenji, Tokyo, Tokyo 105-8001 (JP)
(74) Representative: Horn Kleimann Waitzhofer Patentanwälte PartG mbB

(57) **Abstract**

A database management device of an embodiment has an address information acquisition section, and a similar address generation section. The address information acquisition section acquires first address information. The similar address generation section generates a similar address similar to an address which the first address information indicates, from the first address information, and registers second address information indicating the generated similar address in an address database that stores address information indicating an address.

## Description

### TECHNICAL FIELD

Embodiments of the present invention relate to a database management device, and an address recognition device.

### BACKGROUND ART

In address recognition, the existence of an address database is important. The recognition accuracy becomes higher, as the information registered in an address database is more.

However, it was difficult to obtain an address database which covers up to information of such a level as to identify a household or a resident. Or, such an address database was expensive. In addition, there is a possibility that the content of an address database might be different from an actual address because of a change of address or a change of a place name description

### BRIEF DESCRIPTION OF THE DRAWINGS

Fig. 1 shows a block diagram showing an outline of a whole configuration of a sorting machine for delivery matter of an embodiment.
Fig. 2 shows a schematic block diagram showing a configuration of the address recognition device of the embodiment.
Fig. 3 shows a table showing an example (part 1) of the storage content of the address DB of the embodiment.
Fig. 4 shows a flow chart to explain an operation of the address recognition device of the embodiment.
Fig. 5 shows a diagram showing an example of a photographed image of a letter of the embodiment on which a destination address is described.
Fig. 6 shows a schematic diagram showing an example (part 2) of the storage content of the address DB of the embodiment.
Fig. 7 shows a schematic diagram showing an example (part 3) of the storage content of the address DB of the embodiment.
Fig. 8 shows a schematic diagram showing an example (part 4) of the storage content of the address DB of the embodiment.

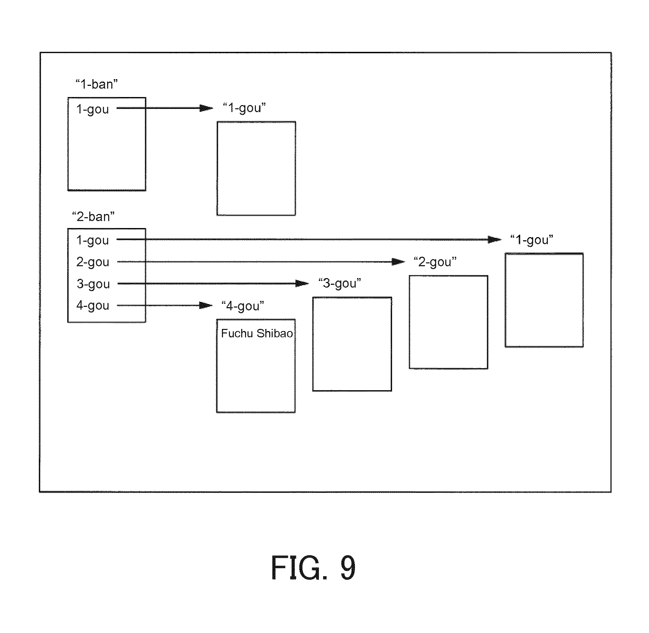

Fig. 9 shows a schematic diagram showing an example (part 5) of the storage content of the address DB of the embodiment.

### EMBODIMENT TO PRACTICE THE INVENTION

A database management device of an embodiment has an address information acquisition section, and a similar address generation section. The address information acquisition section acquires first address information. The similar address generation section generates a similar address similar to an address which the first address information indicates, from the first address information, and registers second address information indicating the generated similar address in an address database that stores address information indicating an address.

Hereinafter, a database management device and an address recognition device of an embodiment will be described with reference to the drawings.

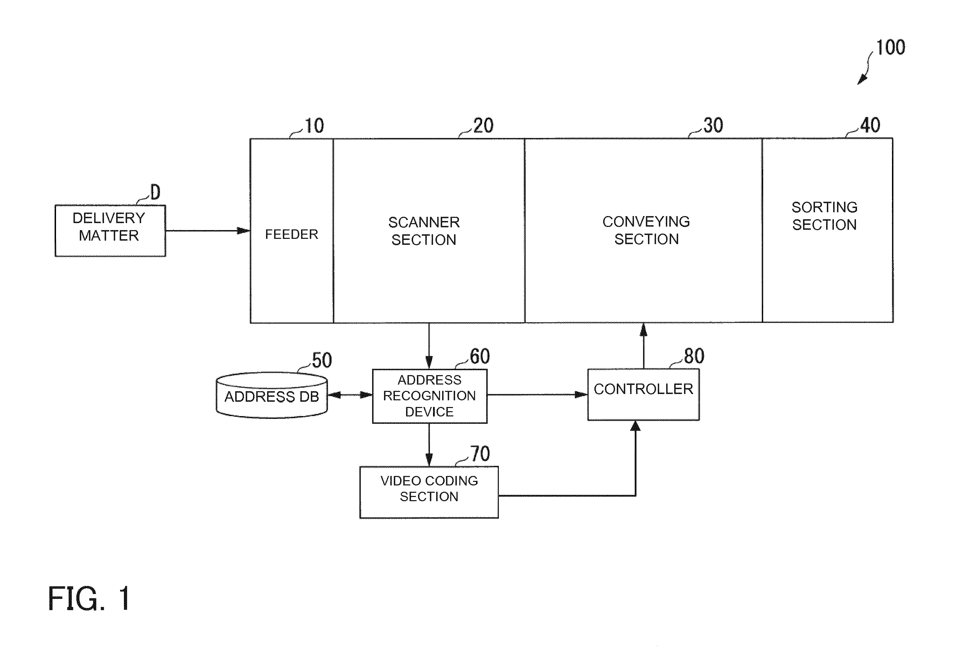

Fig. 1 is a block diagram showing an outline of a whole configuration of a sorting machine for delivery matter of an embodiment. A delivery matter may be any of a postal matter which a post office deal with, such as a postcard, a sealed letter, a parcel, and a matter which a private distribution company deal with, such as a mail delivery, a home delivery article. A sorting machine 100 includes a feeder 10, a scanner section 20, a conveying section 30, a sorting section 40, an address DB (DataBase) 50, an address recognition device 60, a video coding section 70, a controller 80. The feeder 10 feeds delivery matters D to the scanner section 20 one by one. The scanner section 20 photographs the fed delivery matter D by a scanner, and transmits a photographed image to the address recognition device 60. The conveying section 30 conveys the delivery matter D which has been photographed in the scanner section 20 to a sorting box of the sorting designated from the controller 80 in the sorting section 40. The sorting section 40 has sorting boxes provided for each sorting in accordance with a delivery destination of the delivery matter D.

The address DB stores address information indicating an address, and information indicating regulation (described later) in an area appeared in the address. The address recognition device 60 performs address recognition to an image inputted from the scanner unit 20, to detect an address contained in the image. In addition, at the time of performing address recognition, preprocessing such as binarization of an image, detection of a domain where an address is stated, detection of a line in the detected domain, character segmentation from the detected line, character recognition of each of segmented characters, database matching are performed. In addition, at the time of this detecting address, the address recognition device 60 refers to the information which the address DB 50 stores. When the address DB 50 does not store address information indicating the detected address, the address recognition device 60 registers the address information indicating the address, and address information of a similar address which is generated from the address and similar to the address in the address DB 50.

The address recognition device 60 inputs the address information indicating the detected address to the controller 80 as address information indicating an address of a destination. When having failed in the address recognition, the address recognition device 60 inputs the image inputted from the scanner section 20 to the video coding section 70. The video coding section 70 displays the image inputted from the address recognition device 60, that is the photographed image of the delivery matter D, on a display device. An operator of the video coding section 70 reads the address of the destination from the displayed photographed image, and inputs the read address to the video coding section 70 using an input device such as a keyboard. The video coding section 70 inputs address information indicating the inputted address of the destination to the controller 80. The controller 80 determines sorting of the delivery matter D, from the address of the destination which the address information inputted from the address recognition device 60, or the video coding section 70 indicates. The controller 80 designates the sorting of the determination result to the conveying section 30, as the sorting of the delivery matter D.

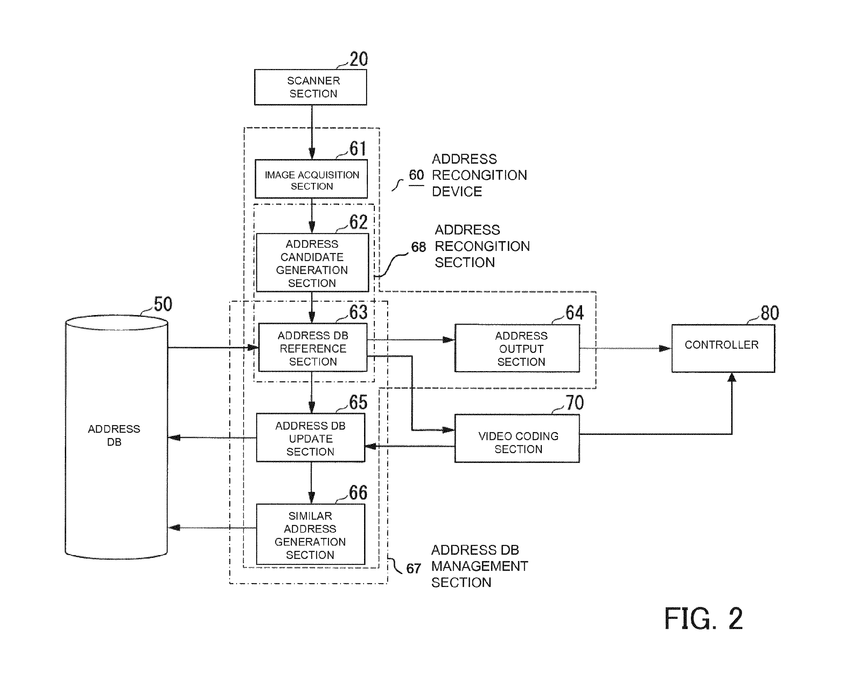

Fig. 2 is a schematic block diagram showing a configuration of the address recognition device 60. The address recognition device 60 includes an image acquisition section 61, an address candidate generation section 62, an address output section 64, an address DB management device 67. The address DB management device (database management device) 67 includes an address DB reference section (address information acquisition section) 63, an address DB update section 65, a similar address generation section 66. The image acquisition section 61 acquires the photographed image which the scanner section 20 has transmitted. The address candidate generation section 62 performs address recognition to the photographed image which the image acquisition section 61 has acquired, to generate a plurality of address candidates, and scores each of which indicates probability of the address candidate. The address candidate generation section 62 calculates the score indicating the probability of the address candidate, based on the segmentation coordinates, the line information, the score of character recognition, and so on, which have been obtained by each of the processings (preprocessing, address domain detection, line detection, character segmentation, recognition of segmented characters) except the database matching, out of the address recognition processing by the address recognition device 60.

The address DB reference section 63 updates each of the scores of a plurality of the address candidates, with reference to the information which the address DB 50 stores. For example, when the address DB 50 stores address information coincident with an address of the address candidate, the address DB reference section 63 updates the score of the address candidate, using the score which the address DB 50 stores. In addition, when the address DB 50 stores information relating to the regulation against a portion of the address of the address candidate, the address DB reference section 63 increases the score of the address candidate when the address candidate meets the regulation, and the address DB reference section 63 decreases the score of the address candidate when the address candidate does not meet the regulation. The address DB reference section 63 selects the address candidate having the highest score of probability, with reference to the updated score, and inputs the address information indicating an address of the address candidate to the address output section 64. However, when the highest score of probability is lower than a predetermined score of probability, the address DB reference section 63 determines that the address recognition has failed, and inputs the photographed image which the image acquisition section 61 has acquired to the video coding section 70.

The address candidate generation section 62 and the address DB reference section 63 are an address recognition section 68 which recognizes an address from the image which the image acquisition section has acquired, with reference to the address database to store the address information, and generates first address information indicating the recognized address. In addition, the address DB reference section 63 is an address information acquisition section to acquire the first address information.

The address output section 64 transmits the address information inputted from the address DB reference section 63 to the controller 80, as address information indicating the address of the destination. In addition, the video coding section 70 transmits the address information indicating the address which has been inputted to the video coding section 70 by an operator to the controller 80, as address information indicating the address of the destination. The address DB update section 65 updates the address DB 50, based on the address information indicating the address of the address candidate selected by the address DB reference section 63, or the address information received from the video coding section 70. For example, when the address DB 50 does not store address information coincident with the address of the selected address candidate, the address DB update section 65 registers the address information indicating the address of the selected address candidate. In addition, when the address DB 50 stores the address information coincident with of the address of the selected address candidate, the address DB update section 65 increases the score corresponding to the address information which the address DB stores. The same processing is performed to the address information received from the video coding section 70

The similar address generation section 66 generates a similar address similar to the address of the destination, based on the address information indicating the address of the address candidate selected from the address DB reference section 63, or the address information received from the video coding section 70, and registers address information indicating the generated similar address to the address DB 50. For example, when numeric characters such as a block number, a room number are contained in an address, the similar address is an address in which the numeric characters are replaced by numeric characters having a value smaller than the value of the numeric characters. Specifically, when 3-chome is included in an address, the similar addresses are 2-chome, and 1-chome.

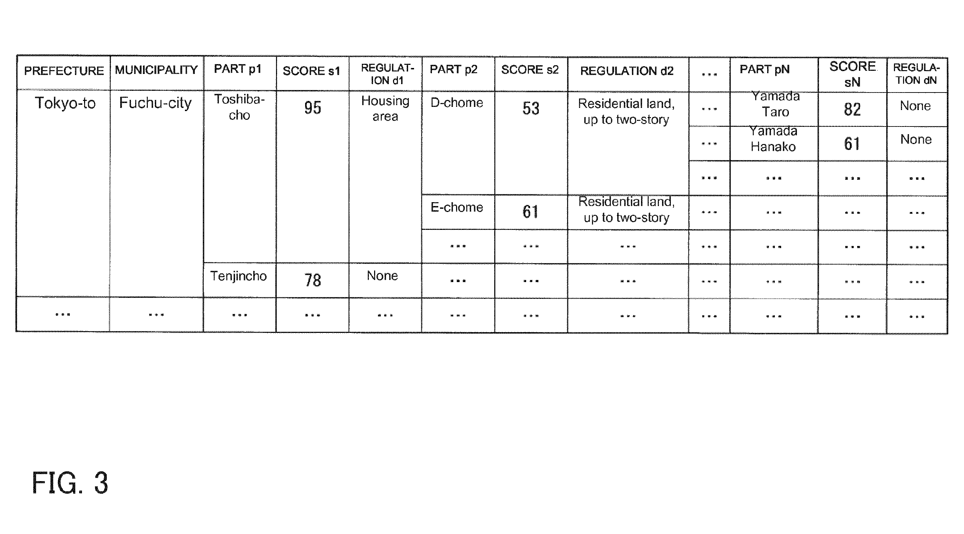

Fig. 3 is a table showing an example of the storage content of the address DB 50. In the example of Fig. 3, the address DB 50 associates and stores a prefecture, a municipality, a part p1, a score s1, a regulation d1, a part p2, a score s2, a regulation d2, ..., a part pN, a score sN and a regulation dN. Out of these items, the prefecture, the municipality, the part p1, the part p2, ..., the part pN are address information. As shown in the part pN of Fig. 3, a full name such as "Yamada Taro", and a store name such as "Yamada Store" are contained in the address information. In addition, municipalities are associated with one value of the prefecture, by the number of municipalities existing in the relevant prefecture. Similarly, the parts p1 are associated with one value of the municipality, by the number of the parts p1 such as names of towns existing in the relevant municipality. The same is applied to the part p2 and later.

The score s1, the score s2, ..., the score sN are scores respectively indicating probabilities of the existence of the part p1, the part p2, ..., the part pN. The probabilities become higher, as the values of these scores are larger. In addition, the regulation d1, the regulation d2, ..., the regulation dN are information indicating regulations in the part p1, the part p2, ..., the part pN, respectively. As the regulation, there are an exclusive residential district, height limitation of a building, and so on, for example.

In the example of Fig. 3, "Fuchu-city", ... are associated with the prefecture "Tokyo-to", as the municipality. "Toshibacho", "Tenjincho" are associated with "Fuchu-city", as the part p1. The score s1 "95", the regulation d1 "None", and the parts p2 "D-chome", "E-chome", ... are associated with "Toshibacho". This indicates that the probability that "Toshibacho" exists in "Fuchu-city" of "Tokyo-to" is "95", and the regulation is "None" in "Toshibacho". Further, the score s2 "53", the regulation d2 "residential land, up to two-story" are associated with the part p2 "D-chome". This indicates that the score of the probability that "D-chome" exists in "Toshibacho" of "Fuchu-city" of "Tokyo-to" is "53", and that there are restriction of residence only, and the building restriction of up to two-story, as the regulation in this "D-chome".

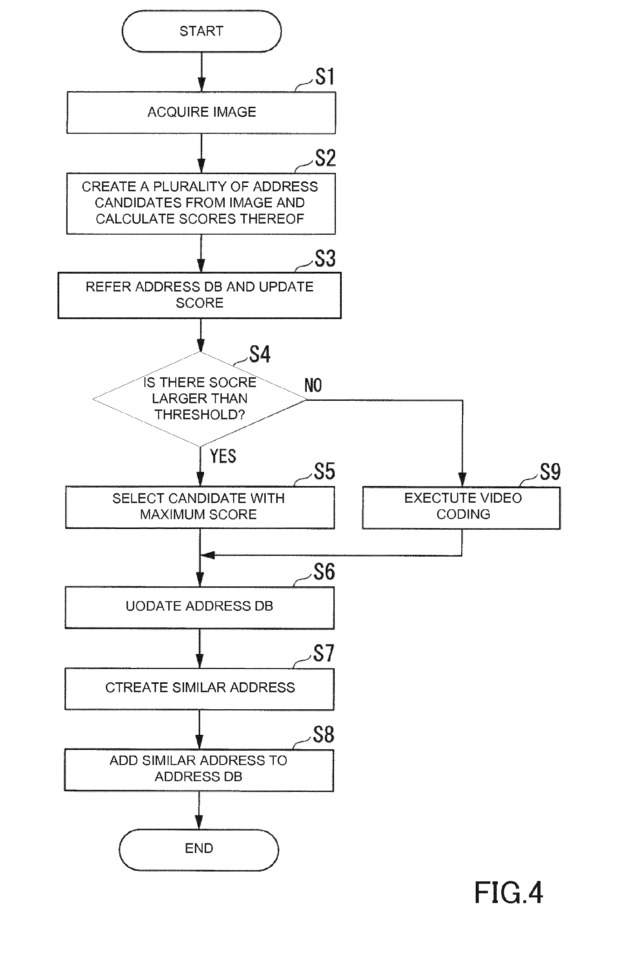

Fig. 4 is a flow chart for explaining operation of the address recognition device 60. The image acquisition section 61 acquires a photographed image which the scanner section has transmitted (step S1). Next, the address candidate generation section 62 performs address recognition to the photographed image acquired in the step S1, to generate a plurality of address candidates and calculate scores of them (step S2). The score is a score indicating probability by the address recognition.

The address DB reference section 63 refers to the address DB 50, to update the score calculated in the step S2 (step S3). Specifically, the address DB reference section 63 adds the score which the address DB 50 stores to the score calculated in the step S2, in association with the address information coincident with the address of the address candidate, out of the address information which the address DB 50 stores. In addition, the address DB reference section 63 subtracts the score calculated in the step S2 by a prescribed value when the address of the address candidate is a regulation object, based on the information indicating the regulation which the address DB 50 stores, in association with the address information coincident with the address of the address candidate, out of the address information which the address DB 50 stores.

For example, when the information indicating the regulation is "up to two-story" and the address of the address candidate includes the room number "305" and it can be estimated that the address of the address candidate is three-story, the address DB reference section 63 determines that the address of the address candidate is a regulation object,. In addition, when the information indicating the regulation is "residential land" and the address of the address candidate includes a store name such as "Yamada Store" that is not a full name and it can be assumed that the address of the address candidate is a store, the address DB reference section 63 determines that the address of the address candidate is a regulation object. In addition, the address DB reference section 63 previously stores a dictionary of full names, for example, and judges whether or not the full name stored in the dictionary exists in the address of the address candidate, to determine whether the address of the address candidate is a full name or a store name.

Next, the address DB reference section 63 determines whether or not the address candidate with a score not less than a predetermined threshold value exists (step S4). Having determined that it exists (step S4 - Yes), the address DB reference section 63 selects the address candidate having the maximum score, and outputs the address information indicating the address of the selected address candidate to the address output section 64. The address output section 64 outputs the inputted address information to the controller 80 as the address information of the destination (step S5). Next, the processing proceeds to a step S6. On the other hand, when the address DB reference section 63 has determined that the address candidate with a score not less than the threshold value does not exist, that is, has determined that the address recognition has failed (step S4 - No), the address DB reference section 63 transmits the photographed image acquired in the step S1 to the video coding section 70. The video coding section 70 acquires the address information indicating an address inputted by an operator who has seen the transmitted photographed image, and transmits this address information to the address DB update section 65 (step S9).

Next, in the step S6, the address DB update section 65 updates the address DB 50. In addition, in this update, the address DB update section 65 performs addition of the address information, and update of scores and so on, as described above. The address DB update section 65 may update the information indicating the regulation. For example, the address DB update section 65 associates the score indicating the probability of the regulation with the information indicating the regulation and stores the score. When the address candidate indicating the address to become a regulation target is selected by the address DB reference section 63, the address DB update section 65 decreases the score. When the score becomes not more than a prescribed value, the address DB update section 65 deletes the information indicating the regulation.

Next, the similar address generation section 66 generates a similar address which is similar to the address of the address candidate selected in the step S5 or the address inputted in the step S9 (step S7). Next, the similar address generation section 66 registers the address information indicating the generated similar address in the address DB 50 (step S8). And the processing is finished.

In addition, the score which is associated with the address information when the address information indicating the address of the address candidate, and so on are registered in the address DB 50, in the step S6, may be made larger than the score which is associated with the address information when the address information indicating the similar address is registered in the address DB 50, in the step S8. This is because of the following reason. Since the address of the address candidate, and so on are information read from the photographed image, the probability that it exists is high. On the other hand, the similar address is an address generated from the address of the address candidate, and so on, and accordingly, the probability that it exists is lower than that of the address of the address candidate, and so on.

In addition, the generation of the address candidate and the calculation of the score by the address candidate generation section 62, the update of the score with reference to the address DB 50 by the address DB reference section 63, and the comparison between the score and the threshold value, and the selection of the address candidate having the maximum score from the address candidate may be performed not for the whole of the address information, but for each item such as the prefecture, the municipality, the part p1.

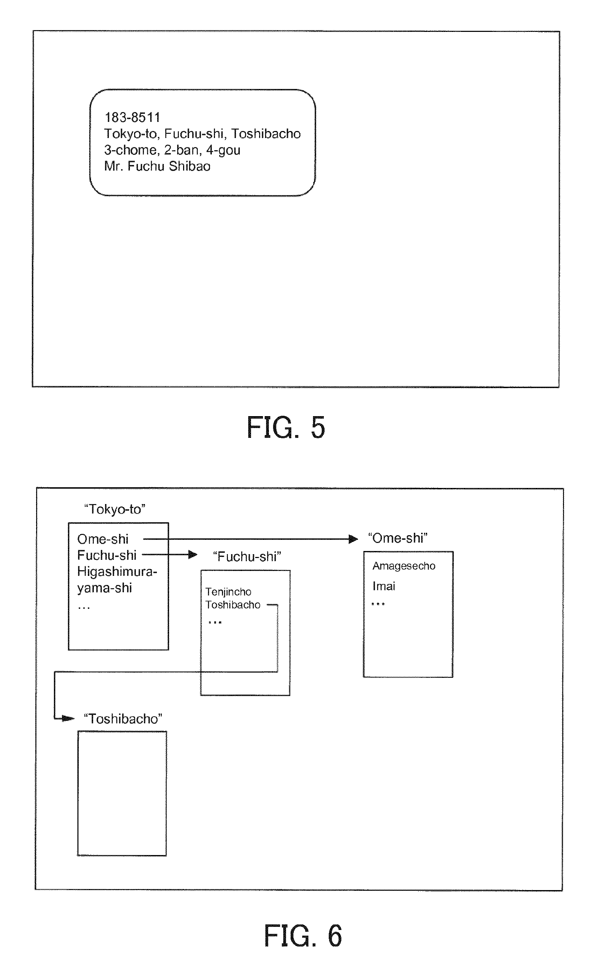

Hereinafter, operation of the address recognition device 60 will be described, based on an example of an image actually containing an address. Here, a letter that is a postal matter is used as a delivery matter. Fig. 5 is a diagram showing an example of a photographed image of a letter to which a label is stuck on which an address of a destination is described. The scanner section 20 of the sorting machine 100 photographs the letter, to transmit the photographed image, the image acquisition section 61 acquires the photographed image which the scanner section 20 has transmitted.

Fig. 6 is a schematic diagram showing an outline of the relating portion, out of the storage content of the address DB 50 at an operation starting time point. Here, a case will be described, wherein though an entry of "Tokyo-to, Fuchu-city, Toshibacho" is made, a block (chome, block number, gou, a full name of a resident, and so on) that is a lower hierarchy thereof has been in the unregistered state. The address DB 50 has actual elements (Tokyo-to, Fuchu-city, and so on, for example) contained in respective elements in an address, such as prefecture, municipality, chome, block number, gou, in the form of respective records, and in each of the records, a pointer to the known lower order record which actually exists is listed.

The address candidate generation section 62 tries the address recognition in the image of Fig. 5, and the address reference section 63 updates the score of the address recognition result, with reference to the address DB 50. Since an entry of the address up to "Tokyo-to, Fuchu-city, Toshibacho" exists in the address DB 50, high recognition accuracy is expected for an address up to "Tokyo-to, Fuchu-city, Toshibacho". However, there is no entry of an address of "3-chome, 2-ban, 4-gou" and later in the address DB 50. For this reason, only when recognition for all characters succeeds, and recognition scores for all characters exceed a rejection threshold value, the recognition succeeds. When a letter is rejected because the recognition has not been performed, the photographed image is sent to the video coding section 70, and the address of the destination is inputted by an operator.

The address information "Tokyo-to, Fuchu-city, Toshibacho, 3-chome, 2-ban, 4-gou, Fuchu Shibao" indicating the address of the destination is sent to the address DB update section 65 from the address DB reference section 63 when the recognition succeeds, or from the video coding section 70 when the recognition fails. The address DB update section 65 examines the present address DB 50, and finds that the information up to "Tokyo-to, Fuchu-city, Toshibacho" is registered, but the information of "3-chome, 2-ban, 4-gou" and later is not registered. That is, the address DB update section 65 finds that a list of a pointer in the record "Toshibacho" is empty.

To begin with, the address DB update section 65 sets a pointer in the record "Toshibacho". In this example, since "3-chome" exists, the address DB update section 65 registers a pointer to "3-chome" in a pointer list of the record "Toshibacho", and generates a record "3-chome" at a destination which the pointer indicates. In addition, since usually, numerals of block portions are assigned without being skipped, it is estimated that not only "3-chome" exists, but "1-chome", "2-chome" and "3-chome" exist. Accordingly, the similar address generation section 66 registers pointers to "1-chome", "2-chome" in the pointer list of the record "Toshibacho", and generates a record "1-chome", a record "2-chome" at destinations which the pointers indicate.

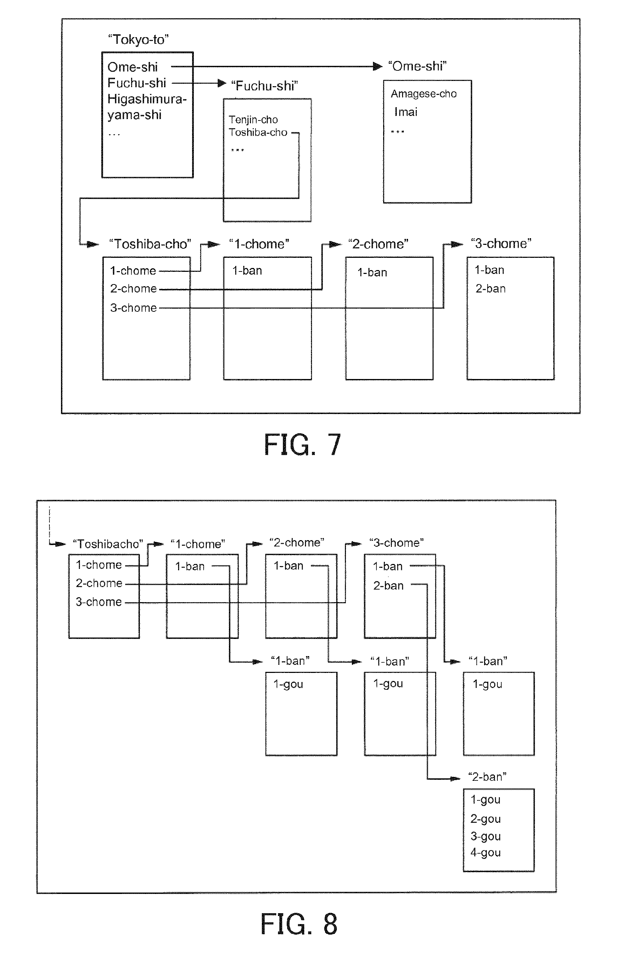

Since the record "1-chome", the record "2-chome" are records which are generated by the estimation of this time, the range of numerals of the lower hierarchy "ban" is unknown. But estimating that at least "1-ban" exists, the similar address generation section 66 generates only "1-ban" as the pointer. On the other hand, since it is known from the actual example of this time that 2-ban exists in the lower hierarchy of the record "3-chome", the similar address generation section 66 generates a pointer to "1-ban", and the address DB update section 65 generates a pointer to "2-ban". An aspect of the records which have been generated as a result of the processing so far is shown in Fig. 7.

Subsequently, the address DB update section 65 and the similar address generation section 66 generate records of a hierarchy of "ban". As described above, since each of "1-chome", "2-chome" has only the pointer to "1-ban", the similar address generation section 66 generates only records of "1-ban", respectively. The similar address generation unit 66 generates pointers to only "1-gou" in the records of "1-ban" which "1-chome", "2-chome" indicate, respectively, for the exactly same reason as described above. On the other hand, it is known that "4-gou" actually exists in the lower hierarchy of "2-ban" of "3-chome". For this reason, in the record "2-ban" of "3-chome", the similar address generation section 66 generates pointes to "1-gou", "2-gou", "3-gou", and the address DB update section 65 generates a pointer to "4-gou". An aspect of the records and the pointers therein which have been generated as a result of the processing so far is shown in Fig. 8.

Subsequently, records of a hierarchy of "gou" are generated by the same method. Since "1-gou", "2-gou", "3-gou" are records which are generated by estimation, and whether or not a record of lower hierarchy further exist, pointers are made empty, respectively. On the other hand, since it is known that Mr "Fuchu Shibao" resides in "4-gou", the address DB update section 65 registers a full name "Fuchu Shibao" in the record of "4-gou".

According to the procedure as described above, "Tokyo-to, Fuchucity, Toshibacho, 3-chome, 2-ban, 4-gou, Fuchu Shibao" which actually exists, and in addition, a plurality of records generated from it is registered in the address DB 50. In addition, an external address DB may be updated, depending on the setting of the address recognition device 60.

In addition, when there is an actual example of *-chome (ban, gou), as the above-described example, the existence of 1-chome - *-chome (ban, gou) is estimated. In addition, when there is an actual example of a room of a room number 305, it is estimated that the number of 305 is generated by a rule that 305 means a fifth room of a third floor. In this case, existence of room numbers of 1**, 2**, 3** is estimated, and regarding 3**, the existence of at least room numbers of 301 - 305 is estimated. Similarly, in the case of a high-rise multiple dwelling housing, when there is an actual example of a room of a room number 1015, it is estimated that the number of 1015 is generated by a rule that 1015 means a fifteenth room of a tenth floor. In this case, the existence of room numbers of 01** (or 1**), 02**, - 09**, 10** is estimated. Further, regarding 10th floor, the existence of room numbers of 1001 - 1015 is estimated.

In addition, when there is an actual example of a room of a room number B305, it is estimated that B305 is generated by a rule that B305 means a fifth room of a third floor of a building B. The numeric character portion can be estimated in the same manner as the above-described room of the room number 305, and further, the existence of a building A similar to the building B is estimated. Accordingly, the existence of room numbers of A1**, A2**, A301, A302, A303, A304 is estimated. In this manner, with respect to the combination of numeric characters and a single alphabetic character, regarding the numeric character portion, the existence of numeric characters of a value smaller than the value of the numeric character is estimated, and regarding the alphabetic character portion, the existence of an alphabetic character of an order anterior to the alphabetic character in the order of ABC is estimated.

When the above-description is generalized, when a room number of N digits exist, high-order (N - M) digits indicate a floor number, and low-order M digits indicate a room number. The similar address generation section 66 previously stores M corresponding to N, such that M = 2 when N =3, and M=2 when N=4.

In addition, it is possible to add information that the record generated by the above-described estimation is not a record which has actually existed. By this additional information, weight is given in the calculation of certainty factor of the matching score at the time of address recognition, and thereby it is possible to achieve improvement of recognition rate / reduction of misreading rate.

In addition, the address recognition device 60 may have the address DB 50. In addition, the address recognition device 60 may acquire address information from an external address DB, and thereby may construct an initial address DB 50. In addition, the address information may contain a postal code.

In addition, the information indicating the regulation is added to the address DB 50, based on electronic information from a local government and so on.

In this manner, the address DB management device 67 is provided with the similar address generation section 66 which generates the similar address similar to the address which the acquired address information indicates, and registers the address information indicating the generated similar address in the address DB 50.

By this means, since not only the acquired address information, but also the address information indicating the similar address can be registered in the address DB 50, it is possible to effectively construct the address database.

In addition, the similar address generation section 66 generates the similar address similar to the address which the acquired address information indicates. The similar address generation section 66 changes a part of the character string, out of the addresses which the acquired address information indicates, to generate the similar address. A part of the character string is a single or a plurality of numeric characters, or a combination of a single or a plurality of numeric characters and a single alphabetic character.

By this means, when a block number, a room number and so on each composed of a numeric character or a combination of a numeric character and an alphabetic character are included in an address, it is possible to generate an address with a block number, a room number and so on which are similar to the block number, the room number and so on thereof.

In addition, in the present embodiment, the address information is acquired by performing the address recognition of the photographed image of the delivery matter D, or acquired by that the address is inputted by an operator, but the address information may be acquired by other methods, such as reading a two-dimensional code.

In addition, the similar address generation section 66 changes a single or a plurality of numeric characters into numeric characters of a value smaller than the value of the numeric characters, to generate the similar address. The similar address generation section 66 changes a single alphabetic character into an alphabetic character of an order anterior to the alphabetic character in the order of ABC, to generate the similar address.

By this means, when a block number, a room number and so on are included in an address, it is possible to generate an address with high possibility of the existence.

In this manner, the address recognition device 60 is provided with the address DB reference section 63 (an address information acquisition section to acquire first address information) which selects one address candidate from a plurality of address candidates which have been recognized from the image, with reference to the address information which the address DB 50stores, and generates first address information indicating an address of the selected address candidate. In addition, the address recognition device 60 is provided with the similar address generation section 66 which generates a similar address from the first address information, and registers second address information indicating the generated similar address in the address DB 50. By this means, it is possible to effectively construct the address DB 50, and enhance accuracy of the address recognition.

Further, the address DB 50 stores information indicating regulation for each district, and the address DB reference section 63 refers the information indicating the regulation at the time of recognizing an address.

By this means, since it is possible to use consistency with the regulation at the time of recognizing an address, it is possible to enhance accuracy of the address recognition.

In addition, the address DB update section 65 updates the information indicating the regulation which the address DB 50 stores, with reference to the address information indicating the address of the address candidate which the address DB reference section 63 has selected, or the address information indicating the address inputted from the video coding section 70.

By this means, since it is possible to estimate the regulation for each district, and use the estimated consistency with the regulation at the time of recognizing an address, it is possible to enhance accuracy of the address recognition.

According to at least one of the embodiments described above, the database management device includes the similar address generation section 66 which generates a similar address similar to an address that the acquired address information indicates, and registers the address information indicating the generated similar address in the address DB 50. Thereby the database management device is possible to effectively construct the address database. In addition, according to the embodiment, it is possible to deal with the change of residence indication, and the addition of an address due to housing land development and so on.

In addition, the address recognition device 60 may be realized in such a manner that a program for realizing the function of the address recognition device 60 shown in Fig. 1 is recorded in a computer readable recording medium, and the program recorded in the recording medium is read and executed by a computer system. Here, "the computer system" called here shall include an OS and a hardware such as peripheral devices.

In addition, in the case of utilizing a WWW system, "the computer system" shall include a webpage providing environment (or a displaying environment).

In addition, "the computer readable recording medium" means a portable medium such as a flexible disk, a magneto-optical disk, a ROM, a CD-ROM, and a storage device such as a hard disk to be incorporated in a computer system. Further, "the computer readable recording medium" shall include one which dynamically holds a program for a short time, such as a communication line in the case of transmitting a program via a network such as Internet, a communication line such as a telephone line, and one which holds a program for a prescribed time, such as a volatile memory in a computer system which functions as a server and a client in this case. In addition, the above-described program may be one which realizes a part of the above-described function, and may be one which realizes the above described function in combination with the program which has already recorded in the computer system.

## Claims

1. A database management device, comprising:
an address information acquisition section to acquire first address information; and
a similar address generation section which generates a similar address similar to an address which the first address information indicates, from the first address information, and registers second address information indicating the generated similar address in an address database that stores address information indicating an address.

2. The database management device according to Claim 1, wherein the similar address generation section changes a part of a character string, out of the address which the first address information indicates, to generate the similar address.

3. The database management device according to Claim 2, wherein the part of the character string is a single or a plurality of numeric characters, or a combination of a single or a plurality of numeric characters and a single alphabetic character.

4. The database management device according to Claim 3, wherein the similar address generation section changes a single or a plurality of numeric characters contained in the part of the character string into numeric characters of a value smaller than a value of the numeric characters, or changes a single alphabetic character contained in the part of the character string into an alphabetic character of an order anterior to the alphabetic character in the order of ABC, to generate the similar address.

5. The database management device according to Claim 3 or 4, wherein:
the part of the character string is numeric characters of N digits;
and
the similar address generation section divides the numeric characters of the N digits into numeric characters of low-order predetermined M digits, and numeric characters of high-order (N - M) digits, and changes the numeric characters of the M digits, or the numeric characters of the (N - M) digits into numeric characters of a value smaller than a value of the numeric characters, to generate the similar address.

6. The database management device according to any of Claims 1 to 5, further comprising:
an address database update section which registers the first address information in the address database when the first address information is not registered in the address database.

7. The database management device according to any of Claims 1 to 6, wherein the similar address generation section generates the similar address similar to the address which the first address information indicates from the first address information and registers the second address information indicating the generated similar address in the address database when the first address information is not registered in the address database.

8. An address recognition device, comprising:
an image acquisition section to acquire an image;
an address recognition section which recognizes an address from the image which the image acquisition section has acquired, with reference to an address database that stores address information, and generates first address information indicating the recognized address; and
a similar address generation section which generates a similar address similar to the address which the first address information indicates, from the first address information, and registers second address information indicating the generated similar address in the address database.

9. The address recognition device according to Claim 8, wherein:
the address database associates information indicating regulation in the domain with a portion indicating a geographic domain out of the address information, and stores the information indicating regulation in the domain; and
the address recognition section refers the information indicating the regulation, at the time of recognizing the address from the image which the image acquisition section has acquired.

10. The address recognition device according to Claim 9, further comprising:
an address DB update section which updates the information indicating the regulation that the address database stores, with reference to the first address information.

11. The address recognition device according to any of Claims 8 to 10, further comprising:
an address database update section which registers the first address information in the address database when the first address information is not registered in the address database.

12. The address recognition device according to any of Claims 8 to 11, wherein the similar address generation section generates the similar address similar to the address which the first address information indicates from the first address information, and registers the second address information indicating the generated similar address in the address database when the first address information is not registered in the address database.
